# EUROPEAN PATENT APPLICATION

(11) **EP 2 873 878 A1**
(43) Date of publication of application: **20.05.2015**
(21) Application number: 13193568.6
(22) Date of filing: 19.11.2013
(51) Int. Cl.: F16B 37/04

(54) **Device for eliminating a clearance in a hole, and corresponding door hinge and assembling method**

(30) Priority: 18.11.2013 EP 13193341
(71) Applicant: U-Shin Deutschland Zugangssysteme GmbH, DE-85253 Erdweg (DE)
(72) Inventor: Bittner, Eric, 85253 Erdweg (DE); Winter, Andreas, 85253 Erdweg (DE)
(74) Representative: Huisman, Aurélien

(57) **Abstract**

The invention relates to a device (1) for eliminating a clearance in a hole (11) of an element (9), comprising tightening means (13) with at least one part of the tightening means (13) is able to be mounted through the hole (11), wherein said device (1) further includes fixing means (15), said fixing means (15)comprising a clamping part (19) able to be inserted in the corresponding hole (11), so that the fixing means (15) are arranged between the tightening means (13) and said element (9), and the said fixing means (15) being connected to the tightening means (13) so that the rotation of the tightening means (13) rotates the fixing means (15) until the clamping part (19) is locked in rotation in the hole (11) and eliminates the clearance in the hole (11).

The invention also relates to corresponding door hinge and assembling method.

## Description

The invention relates to a device for eliminating a clearance in a hole of an element. The device also enables to fasten a fixed part of the vehicle and a mobile part of the vehicle, more precisely to a mobile part of a vehicle door.

The element comprising a hole wherein a clearance has to be eliminated may be a hinge belonging to a pivotable door of an automotive vehicle. The vehicle door may be either a side door, a tailgate, the lid for closing the engine compartment or the flap for closing a roof opening in a vehicle.

The hinge is thereafter named door hinge.

This invention also relates to such a door hinge comprising a hole in which the device of the invention is mounted.

The invention also relates to a method for assembling the device of the invention in a hole of an element, such as the door hinge.

As an example, on vehicles equipped with an automatic tailgate two modular drive units for actuating the tailgate are generally connected to two door hinges. Alternatively, one modular drive unit is connected to one door hinge.

A modular drive unit comprises in a known manner a motor, a gear assembly and transmission means connected to the door hinge. For example, a lever may be on one end screwed to a moving part of the hinge. Moreover, the modular drive unit may also be tightened with the door hinge trough a device mounted in a hole of the hinge. To that end, such a device traditionally has tightening means such as a bolt with a nut. The device according to the invention also enables to fasten the modular drive unit to the door hinge. The modular drive unit is a fixed part of the vehicle and the door hinge is a mobile part of a vehicle door.

Currently, the hole of the door hinge is a longitudinal hole, or even a slot, and for eliminating the clearance between the bolt and the hole, a bolt with an oblong section is used. The bolt is turned in the hole until it locks, meaning the clearance is eliminated. And then the nut may be tightened.

There is a need for improving such device for eliminating a clearance in a hole.

To this end, one subject of the invention is to provide a device for eliminating a clearance in the hole of an element in a sustainable manner.

This object is achieved according to the invention by a device for eliminating a clearance in a hole of an element comprising tightening means with at least one part of the tightening means is able to be mounted through the hole, characterized in that said device further includes fixing means, said fixing means comprising a clamping part able to be inserted in the corresponding hole, so that the fixing means are arranged between the tightening means and said element, and the said fixing means being connected to the tightening means so that the rotation of the tightening means rotates the fixing means until the clamping part is locked in rotation in the hole and eliminates the clearance in the hole.

Advantageously, the fixing means may comprises an axial stop intended to be in contact with the element enabling pre-tension in axial direction when the clamping part is locked in rotation in the hole.

Advantageously, the clamping part may have a cross section in an elongated annular shape.

Advantageously, the clamping part may comprise at least two facing curved areas able to come in contact with the contour of the hole for locking in rotation the clamping part in the hole.

Advantageously, the axial stop may have an elongated shape.

Advantageously, the axial stop and the clamping part may be of one-piece design.

Advantageously, the tightening means and the fixing means may be threaded means.

Advantageously, at least one part of the tightening means may have a substantially conical shape.

Advantageously, the device of the invention may comprise a spring arranged between the fixing means and an interface to be connected to said element.

The invention also relates to a door hinge for a vehicle including a hole for fixing said door hinge to a modular drive unit of a vehicle door and the device of the invention for eliminating the clearance in the hole of said door hinge.

Advantageously, the hole may be a longitudinal hole.

The invention also relates to a method for assembling a device of the invention for eliminating a clearance in a hole of an element, comprising the step of rotating the tightening means and the fixing means until the clamping part is locked in the hole and eliminates the clearance in the hole.

Advantageously, the method may comprise a step of further rotating the tightening means until an axial stop of the fixing means get in contact with the element enabling pre-tension in axial direction.

Advantageously, the method of the invention may comprise a preliminary step of inserting the fixing means into the hole until the axial stop gets out of the hole on the other side of the element.

Other characteristics and advantages of the invention will emerge more clearly on reading the following description, which is given as a non-limiting illustrative example, and the attached drawings, among which:
- figure 1 schematically shows a device for eliminating a clearance in a hole of a customer interface according to an embodiment of the invention,
- figure 2 is a sectional view of the device in figure 1,
- figure 3 schematically shows a device for eliminating a clearance comprising an alternative bolt,
- figure 4a is a rear view of the device for eliminating a clearance mounted in a hole of the customer interface in a first position,
- figure 4b shows a fixing means of the device of figure 4a received in the first position in the hole of the customer interface,
- figure 5a is a rear view of the device for eliminating a clearance mounted in a hole of the customer interface in a second position,
- figure 5b shows the fixing means of the device of figure 5a received in the second position in the hole of the customer interface.

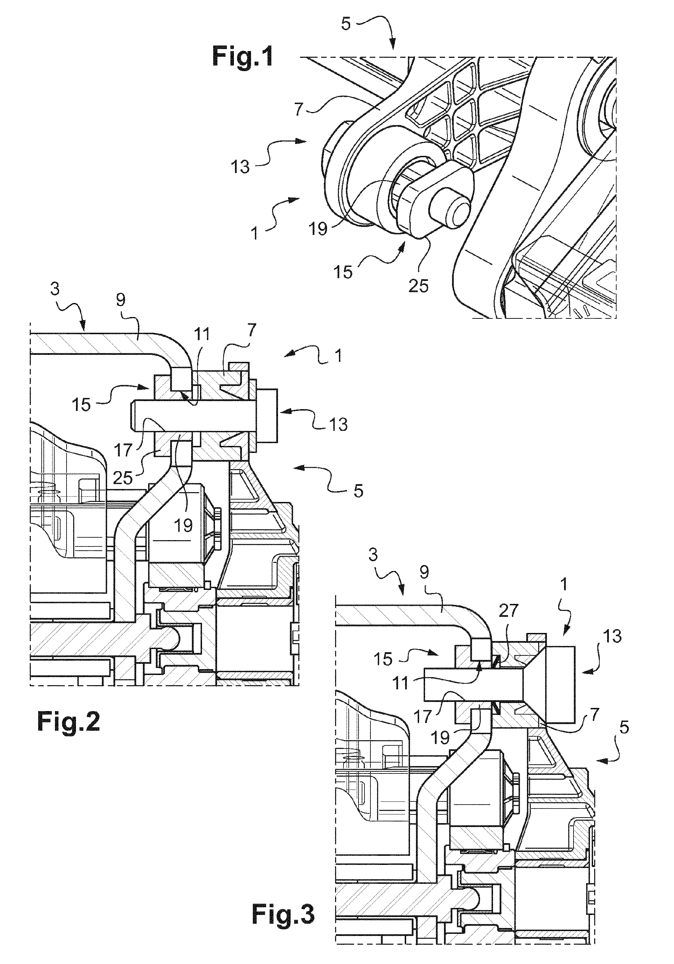

Through the device 1 shown in figures 1 and 2, the invention is particularly aimed at eliminating a clearance in a customer interface, such as a hinge 3 of a vehicle door. The device 1 of the invention also enables to fasten a fixed part of the vehicle to a mobile part of the vehicle door such as the hinge 3 of the vehicle door. Said hinge 3 is thereafter named door hinge.

In this document, the term "vehicle door" is understood quite generally to mean a pivotable part for closing a vehicle opening. The vehicle door may therefore involve either a side door, a tailgate, the lid for closing the engine compartment or the flap for closing a roof opening in a vehicle.

As an example, the following description refers to a tailgate which can be pivoted via a door hinge.

The vehicle door, by instance the tailgate, can be actuated by a modular drive unit 5, partially visible in figure 2, connected to the door hinge 3. The device 1 of the invention is also used for fastening the modular drive unit 5 being a fixed part of the vehicle, to the door hinge 3 being a mobile part of the vehicle door. The device 1 of the invention is able to eliminate a clearance in the door hinge, in order to avoid warping of the modular drive unit during the assembling. Indeed, manufacturing tolerances may have to be compensated.

For example, in a vehicle equipped with automatic tailgate two modular drive units are connected to the two door hinges. Alternatively, one modular drive unit is connected to one door hinge.

The modular drive unit 5 may be arranged on and fastened to a roof support. A collar may be provided for fastening said modular drive unit to the roof support.

This modular drive unit 5 comprises an interface 7 on which the device 1 of the invention for eliminating a clearance is intended to be fixed.

More precisely, the door hinge 3 may comprise a fixed hinge body 9 and a moving hinge body (not visible in the figures). The fixed hinge body 9 may be fixed to the roof support.

The fixed hinge body 9 is further maintained with the modular drive unit 5 via the device 1 for eliminating a clearance which is mounted in a hole 11 of the fixed hinge body 9. This hole 11 may be a longitudinal hole such as an oblong hole, or even a slot.

Of course, the device 1 of the invention may be mounted in a hole of any other interface instead of the fixed hinge body of the door hinge, for assembly with another associated interface such as the bracket of the drive modular unit or any other one.

### Device of the invention

As shown in figures 1 and 2, the device 1 comprises tightening means 13 intended to be inserted in the hole 11 of the hinge 3 and an interposed fixing means 15 intended to be at least partially inserted in the hinge hole 11, so that the fixing means 15 is arranged between the tightening means 13 and the fixed hinge body 9, particularly the walls defining the hinge hole 11, when the device 1 is mounted in the hole 11 of the hinge 3, particularly of the fixed hinge body 9 of the hinge 3.

The tightening means 13 may comprise one single part or at least two complementary parts. As an example, the tightening means 13 includes a screw.

Further, at least one part of the tightening means may have a substantially conical shape. The conical shape reduces the play between the screw and the modular drive unit interface 7.

According to an embodiment illustrated in figure 3, the tightening means 13 may comprise a screw with at least one part with a conical shape, here the head of the screw has a substantially conical shape.

The tightening means 13 and the fixing means 15 are connected together so that when the tightening means 13 is rotated, the fixing means 15 is also rotated.

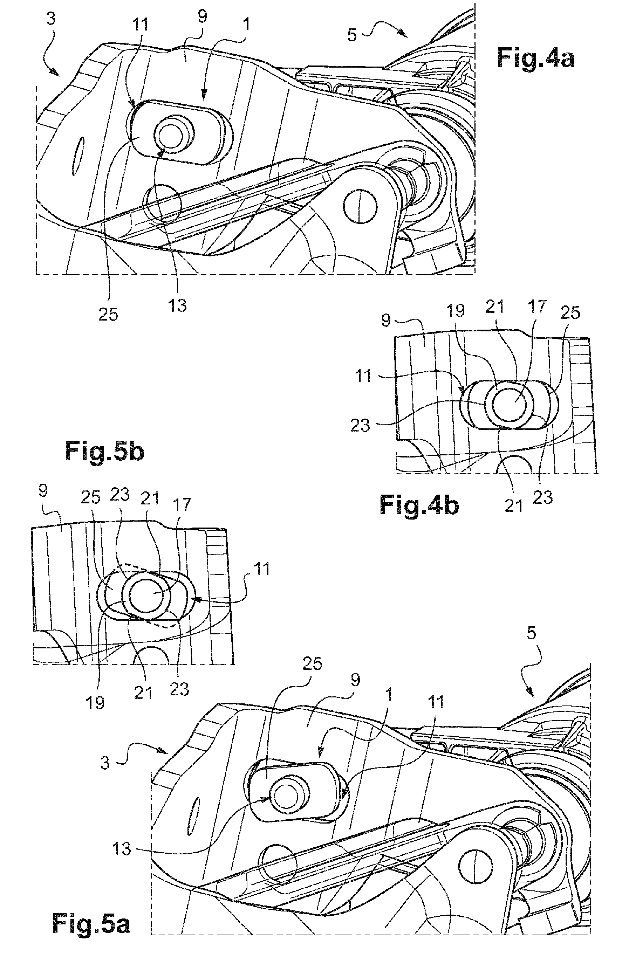

Referring to figure 4a and 4b, when the device 1 for example pre-assembled to the modular drive unit 5 is delivered, the device 1 may be first introduced in the corresponding hinge hole 11 and then the interface 7 of the modular drive unit 5 and the hinge 3 may be connected together through the device 1 by rotating the tightening means 13 driving in rotation the fixing means 15 until reaching the position schematically illustrated in figure 5a.

The fixing means 15 may be designed to receive a part of the tightening means 13, here the pin of the screw. For that, the fixing means 15 is provided with a hole 17 best shown in figures 4b and 5b which is inner threaded and with a shape complementary with the shape of the tightening means 13 crossing through the hole 17.

The fixing means 15 also comprises a clamping part 19 designed to be inserted in the hinge hole 11 and configured to allow clamping of the fixing means 15 in the hinge hole 11 and absorbing the clearance in the hinge hole 11.

To this end, the clamping part 19 is configured to rotate, driven by rotation of the tightening means 13, until it locks in rotation in the hinge hole 11. For example, the clamping part 19 may rotate until an appropriate outside surface of the clamping part 19 comes in contact with the inside wall of the door hinge 3 delimiting the hole 11, meaning with the contour of the hinge hole 11, which is an oblong hole in the illustrated embodiments.

As more visible in figures 4b and 5b, the clamping part 19 may comprise two facing flattened area 21 and two facing curved area 23 also called spline curves, those curved area 23 are intended to come in contact with the contour of the hinge hole 11 by rotation of the clamping part 19.

Thus, the fixing means 15 is clamped in the hinge 3, here the fixed hinge body 9.

Furthermore, the fixing means 15 may advantageously comprise an axial stop 25. The axial stop 25 may be realized in a single piece with the clamping part 19.

The axial stop 25 is intended to enable a pre-tension in axial direction. Indeed, once the fixing means 15 is clamped in the hinge hole 11, by further rotating the tightening means 13, the rotated axial stop 25 gets in contact with the fixed hinge body 9 from the back side. This pre-tension enables a tight axial fixation of the modular drive unit 5 to the fixed hinge body 9.

In the illustrated embodiments, the device 1 comprises a clamping part 19 for clamping in the oblong hole 11 of the hinge 3 and an axial stop 25 for axial pretensioning.

Such a device 1 comprising a fixing means 15 with a clamping part 19 and an axial stop 25 allows a clearance free fixation in rotation and translation of the interface 7 of the modular drive unit 5 to the hinge 3, more precisely to the hinge fixed body 9.

The axial stop 25 may have an elongated shape. The said axial stop 25 may also have at least one protrusion intended to be in contact with the fixed hinge body 9.

The axial stop 25 may have a shape complementary to the shape of the hinge hole 11. In the illustrated embodiments, the axial stop 25 extends sensibly longitudinally, for example with a sensibly oblong shape complementary to the oblong shape of the hinge hole 11.

Moreover, the axial stop 25 is shaped so that it can go through the hinge hole 11. In the embodiments shown, the axial stop 25 has a smaller length of the hinge hole 11.

When the clamping part 19 is clamped in the hinge hole 11, by further rotating the fixing means 15, the length of the axial stop 25 doesn't extend any more in the same longitudinal direction than the longitudinal hole 11, as schematically shown in figures 5a and 5b.

According to another embodiment illustrated in figure 3, the device 1 of the invention may further comprise a spring 27 arranged between the interface 7 of the modular drive unit 5 and the fixing means 15, more precisely the clamping part 19 of the fixing means 15.

The spring 27 is intended to hold the parts axially in the delivery position, here the interface 7 of the modular drive unit 5 and the device 1.

It may be a spring working in compression.

### Method of assembling

The method may comprise a step of pre-assembling the device 1 as described above with the modular drive unit 5 for delivery to the customer before assembling for example to the hinge 3 of a vehicle door.

For the assembly of the modular drive unit 5 in the vehicle body, the tightening means 13, such as a screw, is rotated. By rotating the tightening means 13, the fixing means 15 is first rotated until the clamping part 19 locks in rotation in the hinge hole 11. According to the illustrated embodiment, the fixing means 15 is rotated until the curved area 25 of the clamped part 19 comes in contact with the contour of the hole 11 of the fixed hinge body 9, leading to a clearance-free connection of the two parts in rotation direction. Therefore the fixing means 15, more precisely the clamping part 19, is clamping in the hinge hole 11.

The method, may comprise a preliminary step wherein, the axial stop 25 for example with a sensibly oblong shape, is first positioned inside the hinge hole 11 of the fixed hinge body 9, and moved forward until the axial stop 25 gets out on the other side of the fixed hinge body 9 as shown in figure 4a. The method may comprise a step of further rotating the tightening means so that the axial stop 25 gets in contact with the fixed hinge body 9, here from the back side, bringing pretension in the axial direction. The threaded screw and the fixing means 15 are closer together fastening that way the fixed hinge body 9 and the interface 7 of the modular drive unit 5 together.

Connecting the interface 7 of the modular drive unit 5 to the hinge 3, more precisely to the hinge fixed body 9, through such a device 1 comprising a fixing means 15 with a clamping part 19 allows a clearance free fixation in rotation.

Furthermore, with a fixing means 15 also comprising an axial stop 25 as described above both connected parts, here the modular drive 5 and the fixed hinge body 9, are fixed in translation too.

## Claims

1. Device (1) for eliminating a clearance in a hole (11) of an element (9), comprising tightening means (13) with at least one part of the tightening means (13) is able to be mounted through the hole (11),
**characterized in that** said device (1) further includes fixing means (15), said fixing means (15)comprising a clamping part (19) able to be inserted in the corresponding hole (11), so that the fixing means (15) are arranged between the tightening means (13) and said element (9), and the said fixing means (15) being connected to the tightening means (13) so that the rotation of the tightening means (13) rotates the fixing means (15) until the clamping part (19) is locked in rotation in the hole (11) and eliminates the clearance in the hole (11).

2. Device according to claim 1, wherein the fixing means (15) comprises an axial stop (25) intended to be in contact with the element (9) enabling pre-tension in axial direction when the clamping part (19) is locked in rotation in the hole (11).

3. Device according to any previous claim 1 or 2, wherein the clamping part (19) has a cross section in an elongated annular shape.

4. Device according to claim 3, wherein the clamping part (19) comprises at least two facing curved areas (23) able to come in contact with the contour of the hole (11) for locking in rotation the clamping part (19) in the hole (11).

5. Device according to claim 2 taken in combination with any of the previous claims, wherein the axial stop has an elongated shape.

6. Device according to claim 2 or 5, wherein the axial stop (25) and the clamping part (19) are of one-piece design.

7. Device according to claim 2 taken in combination with any of the previous claims, wherein the tightening means (13) and the fixing means (15) are threaded means.

8. Device according to any one of the preceding claims, wherein at least one part of the tightening means (13) has a substantially conical shape.

9. Device according to any one of the preceding claims, comprising a spring (27) arranged between the fixing means (15) and an interface (7) to be connected to said element (9).

10. Door hinge (3) for a vehicle including a hole (11) for fixing said door hinge (3) to a modular drive unit (5) of a vehicle door and a device (1) for eliminating the clearance in the hole (11) of said door hinge (3) as set forth in any one of claims 1 to 8.

11. Door hinge (3) according to claim 10, wherein the hole (11) is a longitudinal hole (11).

12. Method for assembling a device (1) according to any one of claims 1 to 8 for eliminating a clearance in a hole (11) of an element, comprising the step of rotating the tightening means (13) and the fixing means (15) until the clamping part (19) is locked in the hole (11) and eliminates the clearance in the hole (11).

13. Method according to claim 12, comprising a step of further rotating the tightening means (13) until an axial stop (25) of the fixing means (15) get in contact with the element (9) enabling pre-tension in axial direction.

14. Method according to claim 13, comprising a preliminary step of inserting the fixing means (15) into the hole (11) until the axial stop (25) gets out of the hole (11) on the other side of the element 9.
